# EUROPÄISCHE PATENTANMELDUNG

(11) **EP 2 647 796 A1**
(43) Veröffentlichungstag der Anmeldung: **09.10.2013**
(21) Anmeldenummer: 12163065.1
(22) Anmeldetag: 04.04.2012
(51) Int. Cl.: F01D 5/20, F01D 5/22, F01D 11/08, F01D 11/12

(54) **Dichtungssystem für eine Strömungsmaschine**

(71) Anmelder: MTU Aero Engines AG, 80995 München (DE)
(72) Erfinder: Mahle, Inga, Dr., 81669 München (DE); Böck, Alexander, 82288 Kottgeisering (DE)

(57) **Zusammenfassung**

Die Erfindung betrifft ein Dichtungssystem 10 für eine Strömungsmaschine, insbesondere für eine Gasturbine, wobei das Dichtungssystem 10 in einem Ringraum 30 zwischen einer strömungsbegrenzenden Wand 22 der Strömungsmaschine und mindestens einer Laufschaufelreihe umfassend mehrere Laufschaufeln 12 angeordnet ist, wobei das Dichtungssystem 10 mindestens eine an einem zur Wand 22 gerichteten Ende der Laufschaufel 12 angeordnete erste Dichtspitze 18 sowie mindestens einen ersten, in Strömungsrichtung 28 hinter der ersten Dichtspitze 18 an dem zur Wand 22 gerichteten Ende der Laufschaufel 12 ausgebildeten ersten Einlaufbelag 20 sowie mindestens einen an einer Innenseite der Wand 22 angeordneten und der ersten Dichtspitze 18 gegenüberliegenden zweiten Einlaufbelag 24 und mindestens eine, in Strömungsrichtung 28 hinter dem zweiten Einlaufbelag 24 an der Innenseite der Wand 22 angeordnete und dem ersten Einlaufbelag 20 gegenüberliegende zweite Dichtspitze 26 umfasst. Die Erfindung betrifft weiterhin eine Gasturbine mit mindestens einem Dichtungssystem 10.

## Beschreibung

Die Erfindung betrifft ein Dichtungssystem für eine Strömungsmaschine, insbesondere für eine Gasturbine, wobei das Dichtungssystem in einem Ringraum zwischen einer strömungsbegrenzenden Wand der Strömungsmaschine und mindestens einer Laufschaufelreihe umfassend mehrere Laufschaufeln angeordnet ist und mindestens zwei Dichtstellen umfasst. Die Erfindung betrifft weiterhin eine Gasturbine, insbesondere ein Flugzeugtriebwerk, mit mindestens einem Dichtungssystem.

Derartige Dichtungssysteme kommen insbesondere bei so genannten Spalterhaltungssystemen in den Verdichter- und Turbinenkomponenten zur Anwendung. Dabei haben derartige Dichtungssysteme die Aufgabe, einen Dichtspalt von rotierender Beschaufelung zu einem Gehäuse als auch die Spalte von einer stehenden Beschaufelung zu den drehenden Rotomaben minimal zu halten und damit ein stabiles Betriebsverhalten bei hohem Wirkungsgrad zu garantieren. Üblicherweise weisen die rotierenden Bauteile der Turbine Dichtfinnen bzw. Dichtspitzen auf, die in bekannter Weise gegen wabenförmige Dichtungen streifen bzw. einlaufen. Die Dichtungen sind dabei als Anstreif- und Einlaufbeläge ausgebildet. Entsprechende Dichtungssysteme sind zum Beispiel aus der US 4,856,963 B1 und der DE 198 07 247 A1 bekannt. Durch die Minimierung der radialen Spalte oberhalb der Dichtfinnen wird versucht, die Leckageströme durch die Kavitäten in diesen Bereichen, insbesondere in Bereichen oberhalb von Deckbändern von Laufschaufeln und die dadurch entstehenden Wirkungsverluste zu minimieren. Dennoch entstehen beim Eintritt der Leckageströmung in den so genannten Hauptstrom der Strömungsmaschine Mischungsverluste durch die unterschiedlichen Ausrichtungen und Geschwindigkeiten des Hauptstroms und der Leckageströmung. Zudem wird eine nachfolgende Schaufel im Wandbereich nicht in optimaler Weise angeströmt, was zu weiteren Verlusten führt.

Aufgabe der vorliegenden Erfindung ist es daher, ein Dichtungssystem der eingangs genannten Art zu schaffen, welches eine Steigerung des Wirkungsgrads einer Strömungsmaschine gewährleistet. Eine weitere Aufgabe der Erfindung ist es, eine entsprechende Gasturbine mit einem verbesserten Wirkungsgrad zu schaffen.

Die Aufgaben werden erfindungsgemäß durch ein Dichtungssystem mit den Merkmalen des Patentanspruchs 1 und eine Gasturbine mit den Merkmalen des Patentanspruchs 10 gelöst. Vorteilhafte Ausgestaltungen der Erfindung sind in den jeweiligen Unteransprüchen angegeben, wobei vorteilhafte Ausgestaltungen des Dichtungssystems als vorteilhafte Ausgestaltungen der erfindungsgemäßen Gasturbine anzusehen sind. Ebenso sind vorteilhafte Ausgestaltungen der erfindungsgemäßen Gasturbine als vorteilhafte Ausgestaltungen des Dichtungssystems anzusehen.

Ein erfindungsgemäßes Dichtungssystem für eine Strömungsmaschine, insbesondere für eine Gasturbine, ist in einem Ringraum zwischen einer strömungsbegrenzenden Wand der Strömungsmaschine und mindestens einer Laufschaufelreihe umfassend mehrere Laufschaufeln angeordnet. Dabei umfasst das Dichtungssystem mindestens zwei Dichtstellen, wobei die erste Dichtstelle mindestens eine an einem zur Wand gerichteten Ende der Laufschaufel angeordnete erste Dichtspitze sowie mindestens einen an einer Innenseite der Wand angeordneten und der ersten Dichtspitze gegenüberliegenden ersten Einlaufbelag umfasst, und die zweite Dichtstelle in Strömungsrichtung hinter der ersten Dichtstelle angeordnet ist und einen an dem zur Wand gerichteten Ende der Laufschaufel ausgebildeten zweiten Einlaufbelag sowie eine an der Innenseite der Wand angeordnete und dem zweiten Einlaufbelag gegenüberliegende zweite Dichtspitze umfasst. Dabei können die erste Dichtspitze und der zweite Einlaufbelag an einem Deckband der Laufschaufel angeordnet sein. Bei der strömungsbegrenzenden Wand kann es sich um ein Gehäuse der Strömungsmaschine handeln. Durch das erfindungsgemäße Dichtungssystem ist gewährleistet, dass eine Leckageströmung bis zum Wiedereintritt in den so genannten Hauptstrom der Strömungsmaschine eng an dem zur Wand gerichteten Ende der Laufschaufel beziehungsweise dem Deckband der Laufschaufel entlang geleitet wird, sodass dieser bis zum Wiedereintritt in den Hauptstrom weniger stark verzögert wird wie bei herkömmlichen Dichtungssystemen, insbesondere bei Dichtungssystemen, die mindestens zwei Dichtspitzen an dem Deckband der Laufschaufel aufweisen. Des Weiteren kann die Leckageströmung störungsarm, das heißt mit geringer Wirbelbildung in den Hauptstrom eingebracht werden. Dadurch ergibt sich insgesamt eine starke Reduzierung des Geschwindigkeitsgradienten zwischen der Leckageströmung und dem Hauptstrom, wodurch die Mischungsverluste reduziert werden und der Wirkungsgrad der Strömungsmaschine entscheidend verbessert wird. Zudem führt dies zu einer günstigeren Anströmung der nachfolgenden Schaufel. Um die genannten Vorteile zu verwirklichen, ist die in Strömungsrichtung zuletzt angeordnete Dichtstelle des erfindungsgemäßen Dichtungssystems immer wie die genannte zweite Dichtstelle ausgebildet. Des Weiteren kann das erfindungsgemäße Dichtungssystem mittels bereits bekannter Techniken verwirklicht werden. So kann das Dichtungssystem mit relativ leichtem Gewicht aufgebaut werden, sodass ein Versagen der Verbindung zwischen dem zweien Einlaufbelag und der Laufschaufel nicht zu einem Versagen des gesamten Dichtungssystems führt, da die in Strömungsrichtung weiter vorne angeordneten Teile des Dichtungssystems, nämlich die erste Dichtstelle, weiterhin vorhanden sind. Auch Folgeschäden, wie zum Beispiel durch den Einschlag von Teilen des zweiten Einlaufbelags in in Strömungsrichtung weiter hinten gelegene Stufen der Strömungsmaschine sind wegen der relativ geringen Größe des zweiten Einlaufbelags minimiert.

In weiteren vorteilhaften Ausgestaltungen des erfindungsgemäßen Dichtungssystems weist der zweite Einlaufbelag in einem in Strömungsrichtung hinteren Bereich zumindest eine Abschrägung auf. Es ist aber auch möglich, dass das Deckband in einem in Strömungsrichtung hinteren Bereich zumindest eine Abschrägung aufweist. Dabei kann die Abschrägung in einem Winkel α im Bereich zwischen 10 bis 65°, vorzugsweise von etwa 20 bis 45°, zu einer Längsachse der Strömungsmaschine aufweisen. Durch diese Formgestaltung des zweiten Einlaufbelags und/oder des Deckbands wird die Wirbelbildung des Leckagestroms in diesen Bereichen weiter verringert, was zu einem deutlich störungsärmeren Eintritt des Leckagestroms in den Hauptstrom der Strömungsmaschine führt. Dadurch ergibt sich wiederum eine starke Reduzierung des Geschwindigkeitsgradienten zwischen der Leckageströmung und dem Hauptstrom, wodurch die Mischungsverluste reduziert werden und der Wirkungsgrad der Strömungsmaschine verbessert wird.

In einer weiteren vorteilhaften Ausgestaltung des erfindungsgemäßen Dichtungssystems ist die erste und/oder zweite Dichtspitze entgegen der Strömungsrichtung geneigt ausgebildet. Auch hierdurch können Verwirbelungen innerhalb der Leckageströmung deutlich reduziert werden.

In weiteren vorteilhaften Ausgestaltungen des erfindungsgemäßen Dichtungssystems ist die erste Dichtspitze einstückig mit dem Deckband ausgebildet. Es ist auch möglich, dass die zweite Dichtspitze einstückig mit der strömungsbegrenzenden Wand ausgebildet ist. Dadurch ergeben sich fertigungstechnische Vorteile, die insgesamt zu einer Kostenreduzierung bei der Herstellung des Dichtungssystems führen.

In einer weiteren vorteilhaften Ausgestaltung des erfindungsgemäßen Dichtungssystems ist das Dichtungssystem als Stufenlabyrinth ausgebildet. Dadurch kann das Dichtungssystem vorteilhafterweise auf die entsprechenden Gegebenheiten der Strömungsmaschine angepasst werden, insbesondere an die vorhandenen Gegebenheiten in einer Niederdruckgasturbine.

Die Erfindung betrifft weiterhin eine Gasturbine, insbesondere ein Flugzeugtriebwerk, mit mindestens einem Dichtungssystem, wobei das Dichtungssystem in einem Ringraum zwischen einer strömungsbegrenzenden Wand der Gasturbine und mindestens einer Laufschaufelreihe umfassend mehrere Laufschaufeln angeordnet ist und mindestens zwei Dichtstellen umfasst, wobei die erste Dichtstelle mindestens eine an einem zur Wand gerichteten Ende der Laufschaufel angeordnete erste Dichtspitze sowie mindestens einen an einer Innenseite der Wand angeordneten und der ersten Dichtspitze gegenüberliegenden ersten Einlaufbelag umfasst, und die zweite Dichtstelle in Strömungsrichtung hinter der ersten Dichtstelle angeordnet ist und einen an dem zur Wand gerichteten Ende der Laufschaufel ausgebildeten zweiten Einlaufbelag sowie eine an der Innenseite der Wand angeordnete und dem zweiten Einlaufbelag gegenüberliegende zweite Dichtspitze umfasst. Dabei können die erste Dichtspitze und der zweite Einlaufbelag an einem Deckband der Laufschaufel angeordnet sein. Bei der strömungsbegrenzenden Wand kann es sich um ein Gehäuse der Strömungsmaschine handeln. Die erfindungsgemäße Gasturbine weist einen verbesserten Wirkungsgrad auf, da mittels des Dichtungssystems eine Leckageströmung bis zum Wiedereintritt in einen Hauptstrom der Gasturbine eng an dem zur strömungsbegrenzenden Wand gerichteten Ende der Laufschaufeln entlang geleitet werden kann, sodass dieser bis zum Wiedereintritt eine hohe Geschwindigkeit beibehält und dadurch der Geschwindigkeitsunterschied zum relativ schnellen Hauptstrom verringert wird. Zudem gewährleistet das genannte Dichtungssystem eine geringere Wirbelbildung der Leckageströmung, sodass diese relativ störungsarm in die Hauptströmung eingebracht werden kann. Insgesamt führt dies zu einer Reduktion der so genannten Mischungsverluste und zu einer günstigeren Anströmung der nachfolgenden Schaufel. Um die genannten Vorteile zu verwirklichen, ist die in Strömungsrichtung zuletzt angeordnete Dichtstelle des Dichtungssystems immer wie die genannte zweite Dichtstelle ausgebildet. Des Weiteren kann das Dichtungssystem der erfindungsgemäßen Gasturbine mittels bereits bekannter Techniken verwirklicht werden. So kann das Dichtungssystem mit relativ leichtem Gewicht aufgebaut werden, sodass ein Versagen der Verbindung zwischen dem zweiten Einlaufbelag und der Laufschaufel nicht zu einem Versagen des gesamten Dichtungssystems führt, da die in Strömungsrichtung weiter vorne angeordneten Teile des Dichtungssystems weiterhin vorhanden sind. Auch Folgeschäden, wie zum Beispiel durch den Einschlag von Teilen des zweiten Einlaufbelags in in Strömungsrichtung weiter hinten gelegene Stufen der Strömungsmaschine sind wegen der relativ geringen Größe des zweiten Einlaufbelags minimiert. Auch ist die Gefahr einer Rotorunwucht der Strömungsmaschine durch unsymmetrische Einriebe bei der erfindungsgemäßen Gasturbine beziehungsweise durch das erfindungsgemäße Dichtungssystem minimiert.

Weitere Ausgestaltungen des Dichtungssystems der erfindungsgemäßen Gasturbine wurden im Vorhergehenden beschrieben.

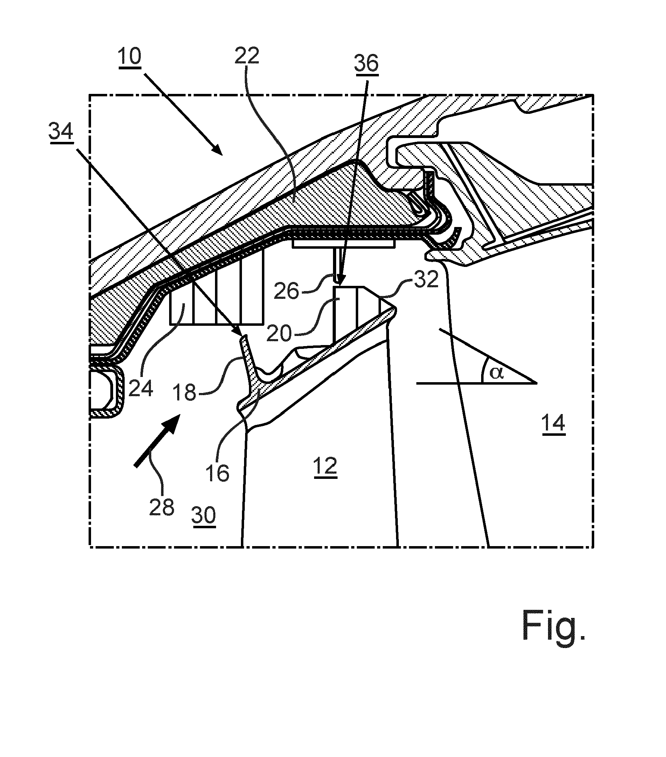

Weitere Merkmale der Erfindung ergeben sich aus den Ansprüchen, dem Ausführungsbeispiel sowie anhand der Zeichnung. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen.

Dabei zeigt die Figur eine abschnittsweise, schematische und teilweise geschnittene Ansicht eines erfindungsgemäßen Dichtungssystems.

Das in der Figur dargestellte Dichtungssystem 10 ist Bestandteil einer Niederdruckgasturbine. Man erkennt, dass das Dichtungssystem 10 in einem Ringraum 30 zwischen einer strömungsbegrenzenden Wand 22 der Niederdruckgasturbine und einer Laufschaufelreihe umfassend mehrere Laufschaufeln 12 angeordnet ist. Das Dichtungssystem 10 umfasst dabei zwei Dichtstellen 34, 36, wobei die zweite Dichtstelle 36 in Strömungsrichtung 28 hinter der ersten Dichtstelle 34 angeordnet ist. Die erste Dichtstelle 34 umfasst eine an einem Deckband 16 der Laufschaufel 12 ausgebildete erste Dichtspitze 18 sowie einen ersten, an einer Innenseite der Wand 22 angeordneten und der ersten Dichtspitze 18 gegenüberliegenden ersten Einlaufbelag 24. Die zweite Dichtstelle 36 umfasst einen in Strömungsrichtung 28 hinter der ersten Dichtspitze 18 angeordneten dem zweiten Einlaufbelag 20 und eine an der Innenseite der Wand 22 angeordnete zweite Dichtspitze 26, die in Strömungsrichtung 28 hinter dem ersten Einlaufbelag 24 angeordnet ist und dem zweiten Einlaufbelag 20 gegenüber liegt. Die ersten und zweiten Anstreif- und Einlaufbeläge 24, 20 können in üblicher Weise ausgebildet sein. In dem dargestellten Ausführungsbeispiel weisen sie eine Wabenstruktur auf. Des Weiteren besteht die Möglichkeit, dass der erste und/oder zweite Einlaufbelag 24, 20 auf das Deckband 16 beziehungsweise die Innenseite der Wand 22 aufgespritzt hergestellt ist. Insbesondere können hierbei Pulverspritzgießverfahren zur Anwendung kommen. Es ist aber auch möglich, den ersten und/oder zweiten Einlaufbelag 24, 20 als Komplettsystem in den genannten Bereichen anzuordnen beziehungsweise mit diesen, beispielsweise durch ein Verlöten, zu verbinden. In dem dargestellten Ausführungsbeispiel ist der zweite Einlaufbelag 20 in Strömungsrichtung 28 axial hinter einer durch eine Z-Verklinkung der Deckbänder 16 entstandenen Versteifungsrippe 38 angeordnet. Dadurch ergibt sich vorteilhafterweise eine ebene Anbringfläche für den zweiten Einlaufbelag 20 auf der Oberfläche des Deckbandes 16.

Des Weiteren erkennt man, dass der zweite Einlaufbelag 20 in einem in Strömungsrichtung 28 hinteren Bereich zumindest eine Abschrägung 32 aufweist. Die Abschrägung 32 weist dabei in dem dargestellten Ausführungsbeispiel einen Winkel α von kleiner 30° zu einer Längsachse der Strömungsmaschine beziehungsweise der Niederdruckturbine auf. Generell ist es möglich, dass der Winkel α in einem Bereich zwischen 10 bis 65°, vorzugsweise in einem Bereich zwischen 20 und 45°, liegt.

Des Weiteren erkennt man, dass das dargestellte Dichtungssystem 10 als Stufenlabyrinth ausgebildet ist. Der erste und zweite Einlaufbelag 24, 20 sowie die erste und zweite Dichtspitze 18, 26 des Dichtungssystems 10 können aus üblicherweise verwendeten Materialien bestehen. Hierzu ist eine Vielzahl von Materialien bekannt. In dem dargestellten Ausführungsbeispiel ist die erste Dichtspitze 18 mit dem Deckband 16 einstückig ausgebildet. Die zweite Dichtspitze 26 ist mit der Innenseite der Wand 22 verbunden. In Strömungsrichtung hinter der Laufschaufel 12 ist in dem dargestellten Ausführungsbeispiel eine Leitschaufel 14 angeordnet.

Das in dem Ausführungsbeispiel dargestellte Dichtungssystem ist nicht auf den Niederdruckgasturbinenbereich beschränkt.

## Patentansprüche

1. Dichtungssystem für eine Strömungsmaschine, insbesondere für eine Gasturbine, wobei das Dichtungssystem (10) in einem Ringraum (30) zwischen einer strömungsbegrenzenden Wand (22) der Strömungsmaschine und mindestens einer Laufschaufelreihe umfassend mehrere Laufschaufeln (12) angeordnet ist und mindestens zwei Dichtstellen (34, 36) umfasst, **dadurch gekennzeichnet, dass** die erste Dichtstelle (34) mindestens eine an einem zur Wand (22) gerichteten Ende der Laufschaufel (12) angeordnete erste Dichtspitze (18) sowie mindestens einen an einer Innenseite der Wand (22) angeordneten und der ersten Dichtspitze (18) gegenüberliegenden ersten Einlaufbelag (24) umfasst, und die zweite Dichtstelle (36) in Strömungsrichtung (28) hinter der ersten Dichtstelle (34) angeordnet ist und einen an dem zur Wand (22) gerichteten Ende der Laufschaufel (12) ausgebildeten zweiten Einlaufbelag (20) sowie eine an der Innenseite der Wand (22) angeordnete und dem zweiten Einlaufbelag (20) gegenüberliegende zweite Dichtspitze (26) umfasst.

2. Dichtungssystem nach Anspruch 1, **dadurch gekennzeichnet, dass** die erste Dichtspitze (18) und der zweite Einlaufbelag (20) an einem Deckband (16) der Laufschaufel (12) angeordnet sind.

3. Dichtungssystem nach Anspruch 1, **dadurch gekennzeichnet, dass** der zweite Einlaufbelag (20) in einem in Strömungsrichtung (28) hinteren Bereich zumindest eine Abschrägung (32) aufweist.

4. Dichtungssystem nach Anspruch 2, **dadurch gekennzeichnet, dass** das Deckband (16) in einem in Strömungsrichtung (28) hinteren Bereich zumindest eine Abschrägung aufweist.

5. Dichtungssystem nach Anspruch 3 oder 4, **dadurch gekennzeichnet, dass** die Abschrägung (32) einen Winkel α im Bereich zwischen 10 bis 65°, vorzugsweise von etwa 20 bis 45°, zu einer Längsachse der Strömungsmaschine aufweist.

6. Dichtungssystem nach einem der vorhergehenden Ansprüche, **dadurch gekennzeichnet, dass** die erste und/oder zweite Dichtspitze (18, 26) entgegen der Strömungsrichtung (28) geneigt ausgebildet sind.

7. Dichtungssystem nach Anspruch 2, **dadurch gekennzeichnet, dass** die erste Dichtspitze (18) einstückig mit dem Deckband (16) ausgebildet ist.

8. Dichtungssystem nach einem der vorhergehenden Ansprüche, **dadurch gekennzeichnet, dass** die zweite Dichtspitze (26) einstückig mit der strömungsbegrenzenden Wand (22) ausgebildet ist.

9. Dichtungssystem nach einem der vorhergehenden Ansprüche, **dadurch gekennzeichnet, dass** das Dichtungssystem (10) als Stufenlabyrinth ausgebildet ist.

10. Gasturbine, insbesondere Flugzeugtriebwerk, mit mindestens einem Dichtungssystem (10), wobei das Dichtungssystem (10) in einem Ringraum (30) zwischen einem Gehäuse (22) der Gasturbine und mindestens einer Laufschaufelreihe umfassend mehrere Laufschaufeln (12) angeordnet ist und mindestens zwei Dichtstellen (34, 36) umfasst, **dadurch gekennzeichnet, dass** die erste Dichtstelle (34) mindestens eine an einem zur Wand (22) gerichteten Ende der Laufschaufel (12) angeordnete erste Dichtspitze (18) sowie mindestens einen an einer Innenseite der Wand (22) angeordneten und der ersten Dichtspitze (18) gegenüberliegenden ersten Einlaufbelag (24) umfasst, und die zweite Dichtstelle (36) in Strömungsrichtung (28) hinter der ersten Dichtstelle (34) angeordnet ist und einen an dem zur Wand (22) gerichteten Ende der Laufschaufel (12) ausgebildeten zweiten Einlaufbelag (20) sowie eine an der Innenseite der Wand (22) angeordnete und dem zweiten Einlaufbelag (20) gegenüberliegende zweite Dichtspitze (26) umfasst.
